# EUROPÄISCHE PATENTSCHRIFT

(11) **EP 2 639 112 B1**
(45) Veröffentlichungstag und Bekanntmachung des Hinweises auf die Patenterteilung: **01.10.2014**
(21) Anmeldenummer: 12075027.8
(22) Anmeldetag: 14.03.2012
(51) Int. Cl.: B60R 1/074

(54) **Gruppe von Außenspiegeln mit unterschiedlichen Funktionen**
Group of external mirrors with different functions
Groupe de rétroviseurs extérieurs ayant des fonctions différentes

(43) Veröffentlichungstag der Anmeldung: 18.09.2013
(73) Patentinhaber: Magna Auteca AG, 8160 Krottendorf/Weiz (AT)
(72) Erfinder: Palvoelgyi, Martin, 8010 Graz (AT); Schadler, Bernhard, 8211 Oberrettenbach (AT); Fuchs, Reinhard, 8212 Pischelsdorf (AT)
(74) Vertreter: Rausch, Gabriele

(56) Entgegenhaltungen:
- EP-A1- 2 230 131
- WO-A1-2009/035931
- US-A1- 2010 296 185

## Beschreibung

Die Erfindung betrifft eine Gruppe von einen Spiegelkopf und einen Fuß aufweisenden Außenspiegel.

Aus der EP 2 230 131 B1 ist eine Gruppe von Außenspiegeln nach dem Oberbegriff von Anspruch 1 bekannt, die einen Spiegel mit einem elektrischen Antrieb und einen mechanischen Spiegel umfasst. Bei diesen Spiegeln sind ein Spiegelfuß und ein Spiegelkopf schwenkbar miteinander verbunden, wobei der Spiegelkopf ein Spiegelgehäuse aufweist. Ein elektrischer Antrieb oder mechanische Teile, wie Druckfedern und eine die Drehachse vorgebende Hülse des mechanischen Spiegels, werden von der dem Spiegelfuß abgewandten Seite in das Spiegelgehäuse eingesetzt und mit dem Spiegelfuß verbunden. An Spiegelfuß am Spiegelgehäuse sind Verrastungen angeordnet, die die Fahrposition für den Spiegel definieren.

Ausgehend von diesem Stand der Technik liegt der Erfindung die Aufgabe zugrunde, eine Gruppe von Spiegeln zu schaffen, die Spiegel mit elektrischen Antrieben mit unterschiedlichen Funktionen umfassen, wobei bei den unterschiedlichen Spiegeln eine Mehrzahl von Bestandteilen gleicher Geometrien verwendbar sein soll.

Diese Aufgab e wird erfindungsgemäß durch die Merkmale des Hauptanspruchs gelöst.

Durch die in den Unteransprüchen angegebenen Maßnahmen sind vorteilhafte Weiterbildungen und Verbesserungen möglich.

Erfindungsgemäß ist eine Gruppe von einen Spiegelkopf und einen Spiegelfuß aufweisenden Außenspiegeln vorgesehen, die mindestens umfasst:
einen ersten Spiegel mit einem elektrischen Antrieb, der eine Funktion des Anhebens und des Drehens und eine erste und zweite Verrastung für die Fest-legung der Fahposition des Spiegelkopfes aufweist, einen zweiten Spiegel mit einem elektrischen Antrieb, der eine Funktion des Drehens und eine erste und zweite Verrastung des Spiegelkopfes aufweist. Dabei umfasst der Spiegelkopf der jeweiligen Spiegel ein Spiegelgehäuse, in das die jeweiligen Antriebe und die Teile des mechanischen Spiegels von der dem Spiegelfuß abgewandten Seite einsetzbar sind. Die elektrischen Antriebe des ersten und des zweiten Spiegels sind in ihrem Aufbau identisch und umfassen ein über einen Elektromotor angetriebenes Zahnrad, ein mit dem Spiegelfuß verbindbares Fußteil, das einen dem Zahnrad zugewandten Ringansatz mit einer Kontur aufweist, einen drehfest mit dem Fußteil verbundenen, axial verschiebbaren Verspannungsring, der Auflagekonturen für mindestens einen an dem Zahnrad angeordneten Vorsprung und an der den Auflagekonturen abgewandten Seite mindestens ein Rastelement aufweist, wobei der Verspannungsring mit Auflagekonturen und der Vorsprung des Zahnrades die jeweilige erste Verrastung realisieren. Das Spiegelgehäuse des ersten Spiegels weist mindestens ein dem ebenfalls mindestens ein Rastelement umfassenden Spiegelfuß zugewandtes Gegenrastelement und eine dem Spiegelfuß abgewandte glatte Fläche auf, während das Spiegelgehäuse des zweiten Spiegels mindestens ein dem Spiegelfuß abgewandtes Gegenrastelement und eine dem Spiegelfuß zugewandte glatte Fläche aufweist. Dabei sind für den ersten Spiegel die zweite Verrastung durch das Rastelement am Spiegelfuß und das Gegenrastelement am Spiegelgehäuse und die Funktion des Anhebens durch Lösen der zweiten Verrastung über die Auflagekonturen des Verspannungsringes in Zusammenspiel mit der Kontur am Ringansatz des Fußteils realisiert. Für den zweiten Spiegel ist die zweite Verrastung durch das mindestens eine Rastelement am Verspannungsring und dem mindestens eine Gegenrastelement am Spiegelgehäuse realisiert, wodurch das Spiegelgehäuse nicht angehoben wird. Beim mechanischen Spiegel sind zumindest einige der mechanischen Teile an das Spiegelgehäuse des ersten oder an das Spiegelgehäuse des zweiten Spiegels angepasst.

Vorzugsweise umfasst die Gruppe von Außenspiegeln auch einen dritten mechanischen Spiegel, der eine federbelastete Verrastung, die der zweiten Verrastung entspricht und so bezeichnet werden kann, und ein identisches Fußteil und eine das Fußteil umgreifende Distanzhülse aufweist. Dabei ist die Distanzhülse mit mindestens einem Rastelement ausgebildet, das dem des Verspannungsringes entspricht. Fußteil und Distanzhülse sind Bestandteile eines Einsatzes des mechanischen Spiegels, der in eines der Spiegelgehäuse des ersten und des zweiten Spiegels einsetzbar ist, wobei die zweite Verrastung von dem mindestens einem Rastelement der Distanzhülse und von dem mindestens einen Gegenrastelement des Spiegelfußes oder des Spiegelgehäuses gebildet wird.

Dadurch, dass die elektrischen Antriebe bzw. der Einsatz des mechanischen Spiegels von oben, d.h. entgegengesetzt zu dem Spiegelfuß, in das Spiegelgehäuse einsetzbar sind, drückt die bei allen Teilen verwendete Druckfeder, die für die elektrischen Antriebe intern oder auch extern zu einem Antriebsgehäuse untergebracht sein kann, immer auch das Spiegelgehäuse des Spiegelkopfes an den Spiegelfuß. Dadurch ist eine Verschraubung zwischen dem Spiegelgehäuse und den jeweiligen Antrieben bzw. den mechanischen Bestandteilen streng genommen nicht mehr notwendig, d.h., die Stabilität des Spiegelkopfes ist nicht mehr von einer Verschraubung abhängig, jedoch ist für eine feste Verbindung zwischen dem jeweiligen Antrieb bzw. den mechanischen Teilen und dem Spiegelgehäuse des Spiegelkopfes aufgrund der Verbindungsredundanz von Vorteil.

Dadurch, dass der eigentliche Antrieb des ersten und zweiten Spiegels für die Funktion des Anhebens und des Drehens (Lift and Turn) und die des doppelten Verrastens (Double Detent) und die Funktion nur des Drehens und der doppelten Verrastung gleich bzw. identisch ausgebildet ist und die jeweiligen Funktionen lediglich von der Ausbildung des Spiegelgehäuse abhängen, kann immer derselbe Antrieb und derselbe Spiegelfuß zum Einsatz kommen und nur die Gestaltung des Spiegelgehäuses des Spiegelkopfs bestimmt, ob sich der Spiegelkopf hebt oder nicht. Durch Vorsehen der zweiten Verrastung zwischen Spiegelfuß und Spiegelgehäuse kann im Zusammenspiel mit den Ablaufkonturen des Verspannungsringes und der Kontur des Ringansatzes des Fußteils durch Lösen der Verrastung und Anheben des Spiegelgehäuses und des Verspannungsringes die Funktion des Anhebens des Spiegelkopfes realisiert werden, während durch Vorsehen der zweiten Verrastung zwischen Spiegelfuß und Verspannungsring die Funktion des Anhebens des Spiegelkopfes nicht realisiert wird, da das Spiegelgehäuse unbeeinflusst ist.

Da für einen manuellen Spiegel eines der beiden Spiegelgehäuse der elektrischen Antriebe verwendet werden kann, kann ein mechanischer Spiegel auf einen elektrisch abklappbaren Spiegel umgerüstet werden, indem der Einsatz des manuellen Spiegels durch einen elektrischen Antrieb ersetzt wird.

Unter doppelter Verrastung soll verstanden werden, dass eine erste Verrastung für den elektrischen Betrieb als Anschlag bzw. Raste in Fahrstellung vorgegeben ist und im manuellen Fall, d.h. in dem Fall, in dem bei einem manuellen Ausklappen, nachdem der Spiegel elektrisch beigeklappt wurde, d.h. in die Parkstellung gebracht wurde, soll ebenfalls eine Verrastung für die Fahrstellung gefunden werden, die die zweite Verrastung darstellt.

Insgesamt kann gesagt werden, dass durch das Vorsehen der erfindungsgemäßen Gruppe identische Antriebe verwendet werden können und somit Teile für die Spiegel mit unterschiedlichen Funktionen, d.h. auch mit manuellem Aus- und Beiklappen eingespart werden können und der notwendige Aufwand bei der Lagerhaltung kann verringert werden.

Gleichteile bei den jeweiligen elektrischen Antrieben können dadurch verwendet werden, dass bei dem Spiegelgehäuse des ersten Spiegels das mindestens eine Rastelement des Verspannungsringes und der Distanzhülse ausgebildet ist, auf der ebenen Fläche des Spiegelgehäuses zu gleiten und bei dem Spiegelgehäuse des zweiten Spiegels das mindestens eine Gegenrastelement des Spiegelfußes ausgebildet ist, dass die ebene Fläche des Spiegelgehäuses auf ihm gleiten kann.

Der Spiegelkopf ist um eine Drehachse schwenkbar und eine die Drehachse umgreifende Druckfeder drückt das Spiegelgehäuse des Spiegelkopfes gegen den Spiegelfuß.

In vorteilhafter Weise sind an dem Fußteil des Antriebs des ersten und zweiten Spiegels Verriegelungselemente zur Bildung einer Bajonettverbindung mit zweiten korrespondierenden Verriegelungs- und Positionierungselementen am Spiegelfuß vorgesehen. Dadurch kann die Verbindung des jeweiligen Antriebs mit Spiegelgehäuse mit dem Spiegelfuß verbessert werden. Es können jedoch auch alle üblichen Arten der Spiegelkopfbefestigung verwendet werden, wie z.B. ein Hohlniet, der bei der Montage vertaumelt wird, eine mit dem Spiegelfuß verschraubte Hülse, eine am Spiegelfuß mitgegossene Hülse.

Dadurch, dass der Verspannungsring des Antriebs des ersten und zweiten Spiegels drehfest mit dem Fußteil, aber axial verschiebbar zu diesem angeordnet ist, wird beim manuellen Ausklappen aus der elektrischen Beiklappstellung das Antriebszahnrad durch die Getriebeselbsthemmung mitgenommen und fährt auf den angehobenen Verspannungsring auf, wodurch die Druckfeder stark vorgespannt wird und bei Erreichen der Fahrstellung die Verrastung mit dem Fußteil oder dem Spiegelgehäuse bewirkt wird. In vorteilhafter Weise wird beim nächsten elektrischen Betätigen das Abtriebszahnrad auf dem Verspannungsring verdreht, bis es seine Ausgangsstellung wieder erreicht.

Für eine konstruktiv einfache drehfeste Verbindung zwischen Ringansatz des Fußteils und Verspannungsring, die gleichzeitig eine axiale Verschiebung zulässt, sind an dem Ringansatz und an dem Verspannungsring Führungselemente angeordnet. Diese können einerseits als in den zylindrischen Wänden des Ringansatzes vorgesehene Schlitze und andererseits als an dem Verspannungsring nach innen gerichtete Erhebungen ausgebildet sein, wobei die Erhebungen in den Schlitzen geführt sind. Es ist jedoch auch denkbar, dass auf der zylindrischen Außenfläche des Ringansatzes axial gerichtete Erhöhungen angeordnet werden, die mit korrespondierenden Vertiefungen am Verspannungsring zusammenarbeiten. In entsprechender Weise ist auch die Distanzhülse des manuellen Spiegels mit Führungselementen ausgebildet.

In vorteilhafter Weise sind der Verspannungsring und das Fußteil so zueinander angeordnet, dass der Verspannungsring den Ringansatz umgreift. Dies gilt ebenfalls für die Distanzhülse des manuellen Spiegels.

Besonders vorteilhaft ist, dass bei den elektrischen Antrieben die Kontur des Ringansatzes und die Auflagekontur des Verspannungsringes in ihren Niveaus so aneinander angepasst sind, dass in der Fahrposition des Spiegelkopfes der mindestens eine Vorsprung des Zahnrades auf der Auflagekontur des Verspannungsringes aufliegt zum Übertragen der Kraft einer vorspannenden Druckfeder über das Spiegelgehäuse auf den Spiegelfuß, wobei bei Erregen des Motors zum Bewegen des Spiegelkopfes in seine Parkposition das Zahnrad mit dem mindestens einen Vorsprung abhängig von einem Freigang des Zahnrades bezüglich des Verspannungsringes auf die Kontur des Ringansatzes des Fußteils läuft und der Verspannungsring zum Lösen der zweiten Verrastung axial anhebbar ist. Der Freigang wird dabei von der Kontur des Ringansatzes und der Ablaufkontur des Verspannungsringes vorgegeben.

Durch diese erfindungsgemäße Anordnung des mit dem Fußteil drehfest, aber axial zu diesem bewegbaren Verspannungsringes und des Ringansatzes des Fußteils liegen die Vorsprünge des Abtriebszahnrades in der Fahrposition auf der Auflagekontur des Verspannungsringes auf, wodurch eine sichere Verrastung zwischen Spiegelgehäuse und Fußteil bzw. zwischen Verspannungsring und Spiegelgehäuse gewährleistet wird, da die Kraft der Druckfeder direkt über den Verspannungsring und das Spiegelgehäuse auf den Spiegelfuß bzw. über den Verspannungsring auf das Spiegelgehäuse übertragen wird. Dadurch, dass beim Überführen des Spiegelkopfes aus der Fahrposition in die Parkposition das Zahnrad erst einen Freigang durchläuft, wodurch die Vorsprünge des Zahnrades auf den Ringansatz bewegt werden, wird die Kraft direkt von dem Ringansatz, der Bestandteil des Fußteils ist, aufgenommen, wodurch Verspannungsring und Spiegelgehäuse von der Kraft der Druckfeder befreit werden und wodurch, da die Vorsprünge des Zahnrades jeweils an einen Anschlag der Kontur des Ringansatzes treffen, das Spiegelgehäuse um das Abtriebszahnrad bewegt wird und Verspannungsring und Spiegelgehäuse bzw. nur Verspannungsring zum Lösen der Verrastung axial anhebbar sind. Somit wird eine konstruktive Möglichkeit zur Verfügung gestellt, die Kraft der Feder vor bzw. während der Klappbewegung umzuleiten, so dass diese nicht mehr auf den Spiegelkopf wirkt. Die benötigte elektrische Leistung, die bei konstanter Spannung durch den Strom bestimmt wird, um den Spiegel zu bewegen, wird dadurch stark verringert.

Um bei dem jeweiligen elektrischen Antrieb des ersten und des zweiten Spiegels eine Umleitung der Kraft der Druckfeder von dem Verspannungsring auf den Ringansatz des Fußteils und umgekehrt zu gewährleisten, liegt die Kontur des Ringansatzes, die in der Stirnfläche des Ansatzes ausgebildet ist, im Bereich des Freiganges des Zahnrads auf einem in Bezug auf die Auflagekontur des Verspannungsringes höherem Niveau. Dadurch wird bei Erregen des Motors das Zahnrad in konstruktiv einfacher Weise auf die Kontur bzw. die Stirnfläche des Ringansatzes bewegt.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines am Spiegelfuß schwenkbar befestigtes Spiegelgehäuse mit einem elektrischen Antrieb,
- Fig. 2: einen Teilschnitt durch Spiegelgehäuse, Spiegelfuß und elektrischen Antrieb zur Darstellung einer Montage von oben,
- Fig. 3: eine Explosionsdarstellung des im ersten und im zweiten Spiegel verwendeten elektrischen Antrieb ohne Spiegelgehäuse,
- Fig.4: die Bestandteile eines ersten Spiegels mit elektrischem Antrieb, Spiegelgehäuse und Spiegelfuß in perspektivischer Explosionsdarstellung und vergrößerter Ansicht des Fußteils und des Verspannungsringes,
- Fig. 5: Teilansichten der Abwicklungen des Antriebs, des Spiegelgehäuses und des Spiegelfußes gemäß Fig. 4 in der Fahrposition und bei einer Abklappbewegung in die Parkposition,
- Fig. 6: die Bestandteile elektrischer Antrieb, Spiegelgehäuse und Spiegelfuß des zweiten Spiegels in Explosionsdarstellung,
- Fig. 7: Teilansichten von Abwicklungen gemäß Fig. 5 für den zweiten Spiegel und
- Fig. 8: Bestandteile eines mechanischen Spiegels in Explosionsdarstellung.

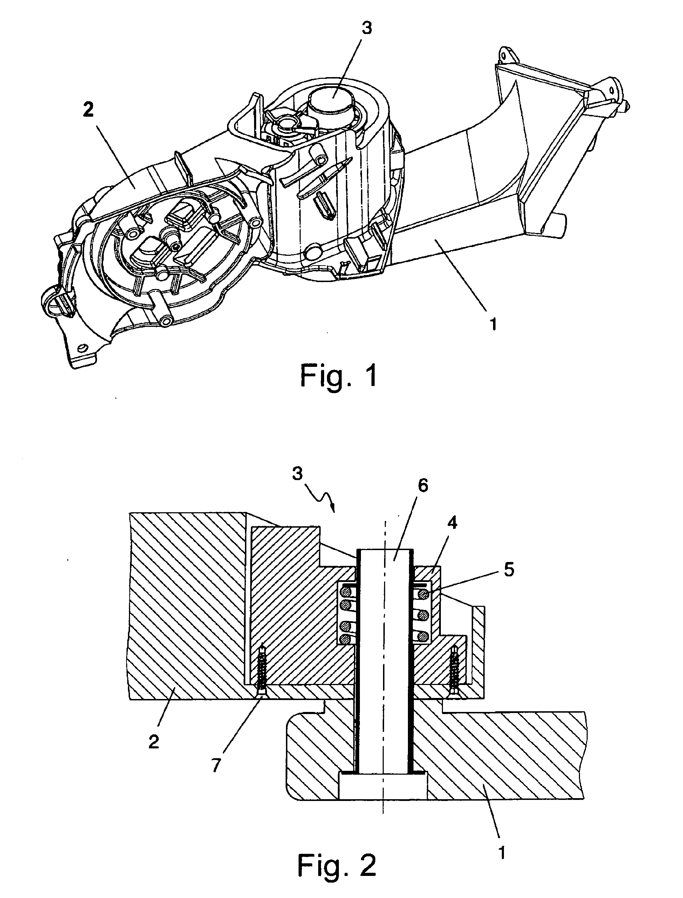

Die in Fig. 1 dargestellten wesentlichen Bestandteile eines Fahrzeugaußenspiegels umfassen einen Spiegelfuß 1, der an der Karosserie eines Kraftfahrzeuges befestigbar ist, ein in Bezug auf den Spiegelfuß 1 schwenkbares Spiegelgehäuse 2, an dem u.a. das Spiegelglas befestigbar ist und eine Antriebsanordnung 3 mit Abklappantrieb, Druckfeder und Hülse (wird weiter unten erläutert), die die Drehachse des Spiegelgehäuses 2 um den Spiegelfuß bildet. Die Art der Montage der in Fig. 1 gezeigten Bestandteile ist in Fig. 2 dargestellt. Dabei wird die Antriebsanordnung 3, die einen Abklappantrieb 4, eine Druckfeder 5 und eine Rohrhülse 6 aufweist, als eine Einheit von oben her, d.h. von der zum Spiegelfuß 1 abgewandten Seite her, in das Spiegelgehäuse 2 und den Spiegelfuß 1 eingesetzt und über eine Bajonettverbindung mit dem Spiegelfuß 1 verbunden. Dabei drückt die Druckfeder 5 das Spiegelgehäuse 2 gegen den Spiegelfuß 1, wodurch die Stabilität des Spiegelkopfes, der das Spiegelgehäuse 2 umfasst, nicht mehr von einer Verschraubung abhängig ist. Um jedoch eine noch festere Verbindung zwischen dem Abklappantrieb 4 und dem Spiegelgehäuse 2 des Spiegelkopfes zu erzielen, können Verschraubungen 7 zwischen Spiegelgehäuse 2 und Antrieb 4 vorgesehen werden.

In Fig. 2 ist die Druckfeder 5 innerhalb des Antriebs 4 untergebracht, in einem anderen Ausführungsbeispiel, das bei der vorliegenden Erfindung ebenfalls angewandt werden kann, liegt die Druckfeder 5 außerhalb des Antriebs 4 und drückt von oben auf den Antrieb 4.

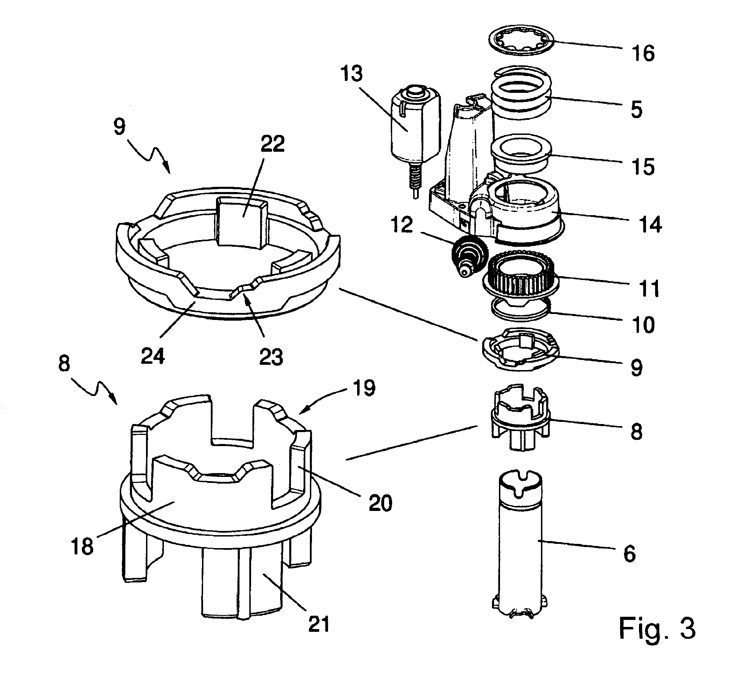

In Fig. 3 ist eine Antriebsanordnung 3 in einer Explosionsdarstellung gezeigt, wobei die einzelnen Komponenten die Rohrhülse, ein Fußteil 8, das auch vergrößert dargestellt ist, ein Verspannungsring 9, der ebenfalls vergrößert dargestellt ist, eine schwache Druckfeder 10, ein Abtriebszahnrad 11, das über eine Zwischenwelle 12 von einem Elektromotor 13 angetrieben wird, ein Antriebsgehäuse 14 mit einer Durchgangsöffnung für die Hülse 6, das zumindest das Abtriebszahnrad 11, die Zwischenwelle 12 und den Motor 13 aufnimmt, eine Federauflage 15 für die Druckfeder 5 und eine mit der Hülse verbundene Klemmscheibe 16 sind. Die Bestandteile 5, 8-11 und 14-16 umgreifen die Hülse 6, die mit dem Spiegelfuß 1 verbunden wird.

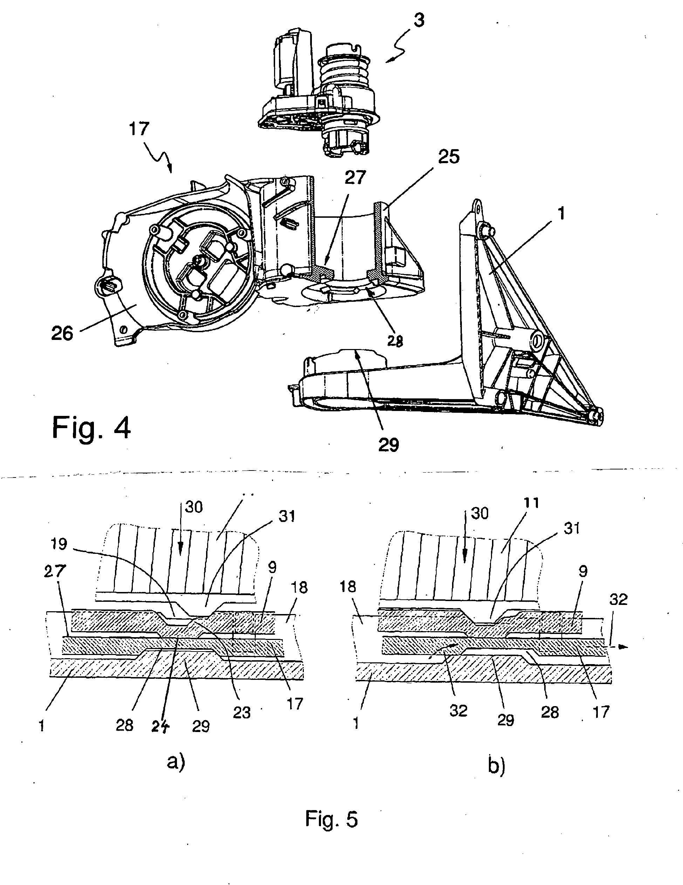

Fig. 4 zeigt die Einzelteile eines ersten Spiegels, der eine doppelte Verrastung für die Einstellung des Spiegelkopfes für die Fahrstellung bzw. Fahrposition und die Funktion "Anheben und Drehen" (Lift and Turn) umfasst. Die Antriebseinheit 3 wird von oben in ein dem erstem Spiegel zugeordnetes Spiegelgehäuse 17 eingesetzt, derart, dass ein Teil der Antriebsanordnung 3 ein Durchgangsloch in dem Spiegelgehäuse 17 durchgreift und mit dem Spiegelfuß 1 verbindbar ist.

Um die Funktion der Antriebsanordnung 3 in Bezug auf das Spiegelgehäuse 17 zu erläutern, wird noch einmal auf Fig. 3 Bezug genommen. Das Fußteil 8 weist einen im Wesentlichen zylindrischen Ringansatz 18 auf, der sich in axialer Richtung erstreckt und der auf seiner Stirnfläche mit einer Kontur 19 (wird weiter unten erläutert) versehen ist und der in seiner zylindrischen Wand Ausnehmungen oder Schlitze 20, im vorliegenden Fall drei, die in axialer Richtung eingearbeitet sind, aufweist. Weiterhin ist das Fußteil 8 mit umfänglichen Positionieransätzen 21 versehen, die in den Spiegelfuß 1 eingreifen, deren Funktion hier aber nicht weiter erläutert werden

Der Verspannungsring 9 gemäß Fig. 3, der den Ringansatz 18 des Fußteils umgreift, weist auf seiner Innenfläche nach Innen gerichtete Führungselemente 22 auf, die mit den Schlitzen 20 des Ringansatzes korrespondieren und mit diesen axiale Führungen bilden. Durch diese Führungen 22, 20 ist der Verspannungsring 9 drehfest mit dem Fußteil 8 verbunden, aber axial zu diesem bewegbar. Auf der Oberseite, d.h. der Stirnfläche des Verspannungsringes 9 dem Abtriebszahnrad 11 zugewandt, ist eine Auflagekontur bzw. Auflagekonturen 23 ausgebildet, die später genauer erläutert werden. Weiterhin sind nach unten gerichtete, d.h. zum Spiegelfuß gerichtete Rastelemente 24 angeformt.

Der Motor 13 treibt über die Zwischenwelle 12 das Abtriebszahnrad 11 an, das bis auf einen Freigang (wird später beschrieben) fest steht, so dass sich bei Erregen des Motors 13 und entsprechender Übertragung der Bewegung des Motors 13 über die Zwischenwelle 12 auf das Zahnrad 11 das zugeordnete Spiegelgehäuse 17 zusammen mit dem Gehäuse 14 des Antriebs 4 um die Drehachse, d.h. um die Hülse 6, bewegen.

Gem. Fig. 4 weist das Spiegelgehäuse 17 einen Gehäuseteil 25, in dem die Antriebsanordnung 3 aufgenommen wird, und ein Gehäuseteil 26 auf, das u.a. das Spiegelglas lagert. In dem Ausführungsbeispiel nach Fig. 4 wird das Durchgangsloch für die Hülse 6 der Antriebsanordnung 3 von einem Randbereich umgeben, dessen dem Antrieb zugewandte Oberfläche 27 glatt und eben ist. An der zum Spiegelfuß 1 gerichteten Oberfläche des Randbereichs des Durchgangslochs des Spiegelgehäuses 17 sind Gegenrastelemente 28 bzw. - konturen angeordnet. Der Spiegelfuß 1 ist mit einem Ansatz mit Rastelementen bzw. -konturen 29 versehen. Dabei bilden die Rastkontur 29 des Spiegelfußes und die Gegenrastelemente 28 des Spiegelgehäuses 17 eine Verrastung. Die gezeigte Verrastung, d.h. die Rastkontur 29 und die Gegenrastelemente 28, besteht aus Erhebungen und Vertiefungen die jeweils ineinander passen. Dabei sind drei Erhebungen gleichmäßig über den Umfang verteilt angeordnet (120° zueinander). Die Verrastung ist ebenfalls so angeordnet, dass sie in Eingriff kommen kann, wenn sich der Spiegelkopf in Fahrposition befindet. Es gibt theoretisch noch andere Stellungen, in die Verrastung in Eingriff kommen kann (alle 120°), diese Stellungen befinden sich jedoch außerhalb des Schwenkbereichs des Spiegelkopfes. Es gibt daher in der Praxis nur eine Position, in der das Verrastungssystem in Eingriff kommen kann und dies ist in der Fahrposition.

Anhand von Fig. 5 soll die Funktionsweise des Anhebens und Drehens und die der Verrastung bzw. Verrastungen näher beschreiben werden. In Fig. 5a) ist die Antriebsanordnung 3 bzw. Teile davon in einer ersten Stellung des Spiegelgehäuses 17 als bewegliches Teil zu dem von dem Spiegelfuß gebildeten feststehenden Teil des ersten Spiegels gezeigt, wobei diese Stellung die Fahrposition ist. Üblicherweise weist die Verrastung zwischen Spiegelfuß 1 und Spiegelgehäuse 17 drei Rastelemente 29 bzw. Gegenrastkonturen 28 über den Umfang auf, wobei die Rastelemente 29 am Spiegelfuß 1 Erhebungen mit ebener Oberfläche und schrägen Seitenflächen oder Rampen aufweisen und die entsprechenden Gegenkonturen 28 des Spiegelgehäuses 17 eine korrespondierende Form haben. Der Verspannungsring 9, der in dem Ringansatz 18 des Fußteils 1 geführt ist, ist mit der Auflagekontur 23, die zum Zahnrad 11 gerichtet ist, versehen und er weist darüber hinaus das bzw. die Rastelemente 24 auf, das bzw. die auf der ebenen und glatten Fläche 27 des Randbereichs der Durchgangsöffnung des Spiegelgehäuses 17 aufliegen. Die Auflagekonturen 23, von denen es ebenfalls drei über den Umfang verteilte gibt, ist als abgestufte Einbuchtung ausgebildet, die einen tiefen Bereich und eine Stufe mit höherem Niveau dazu umfasst, die jeweils durch schräge Flächen verbunden sind. Das Zahnrad 11, das durch die Federkraft 30 auf den Verspannungsring 9 gedrückt wird, hat auf einer seinem dem Verspannungsring zugewandten Seite drei Vorsprünge 31, wobei die Vorsprünge 31 jeweils auf der Stufe mit höherem Niveau der Auflagekontur 23 aufliegt und durch eine schräge Fläche einen Anschlag hat. Der Vorsprung 31 zusammen mit der Stufe höherem Niveaus der Einbuchtung und der schrägen Fläche als Anschlag bildet eine "Verrastung" des Zahnrads 11 zusammen mit dem Verspannungsring 9 in der Fahrposition des Spiegelkopfes. Der Ringansatz 18 bzw. dessen Kontur 19 hat drei über den Umfang verteilte Vertiefungen, die mit den Auflagekonturen 23 des Verspannungsringes 9 in ihrer Lage auf dem jeweiligen Umfang im Wesentlichen bzw. zum größten Teil übereinstimmen.

In der in Fig. 5a) dargestellten Fahrposition liegt die Stufe des abgestuften Bereichs der Auflagekontur 23 des Verspannungsringes 9 in Bezug auf den Boden der Vertiefung des Ringansatzes 18 des Fußteils auf einem höheren Niveau, so dass, wie schon bemerkt, die Vorsprünge 31 des Abtriebszahnrades 11 die Federkraft 30 der Druckfeder 5 auf den Verspannungsring 9, das Spiegelgehäuse 17 auf den Spiegelfuß 1 lenken. Dadurch sind das Spiegelgehäuse 17 und der Spiegelfuß 1 durch die Verrastung sicher miteinander verbunden und die Druckfeder 5 und die Geometrie der Verrastung 28, 29 sind hierbei so ausgelegt, dass der Motor 13 zu schwach ist, um die Verrastung zu lösen.

In Fig. 5b) ist der Beiklappvorgang dargestellt. Zuvor wird der Motor 13 bei Beginn des Beiklappvorgangs bestromt, wobei sich das Spiegelgehäuse 17 mit den entsprechend aufgenommenen beweglichen Teilen des Beiklappantriebs 4 durch die Verrastung zwischen Spiegelgehäuse 17 und Spiegelfuß 1 nicht bewegen kann. Das Abtriebszahnrad 11 hat jedoch entgegen der Ab- bzw. Beiklapprichtung anfangs keinen Anschlag, um das Stützmoment aufzubringen, es hat daher bezüglich des Verspannungsringes 9 einen gewissen Freigang. Das Abtriebszahnrad 11 dreht sich nun entgegen der Abklapprichtung, bis die Vorsprünge 31 jeweils von der Stufe des abgestuften Bereichs der Auflagekontur 23 weglaufen und sich dann jeweils an dem Boden der Vertiefung der Kontur 19 des Ringansatzes 18 abstützen, wodurch die Federkraft 30 der Druckfeder 5 nun vom zylindrischen Ringansatz 18 des Fußteils 8 getragen wird. Dabei ist zu beachten, dass der Boden der Vertiefung der Kontur 19 des Ringansatzes 18 in Bezug auf den Boden der Auflagekontur 23 des Verspannungsringes 9 auf einem höheren Niveau liegt. Da die Federkraft 30 nun direkt auf den Ringansatz 18 bzw. den Fußteil 8 wirkt, können das Spiegelgehäuse 17 und der Verspannungsring 9 ungehindert nach oben wandern und die Verrastung zwischen Spiegelgehäuse 17 und Spiegelfuß 1 kann sich lösen. Dadurch ist ein Abklappen des Spiegelkopfes in Bezug auf den Spiegelfuß 1 möglich.

In Fig. 5b) haben sich der Verspannungsring 9 und das Spiegelgehäuse 17 und damit der restliche Antrieb 4, d.h. Motor 13 und Zwischenwelle 12 und dergleichen und auch der Spiegelkopf gehoben und das Spiegelgehäuse 17 bewegt sich um das feststehende Abtriebszahnrad 11 in Richtung des eingezeichneten Pfeils 32. Dadurch wird die "Lift and Turn"-Funktion realisiert. Der Verspannungsring 9 hat sich über die axiale Führung 20, 22 nach oben verschoben. Die Hebehöhe des Verspannungsringes 9 wird über die Rampenhöhe der Verrastung des Spiegelgehäuses 17 mit dem Spiegelfuß 1 bestimmt. Im gehobenen Zustand wirkt die Federkraft 30 weiterhin direkt auf den Spiegelfuß 1, d.h. zwischen Verspannungsring 9 und den Vorsprüngen 31 des Abtriebszahnrades 11 ist ein Spiel vorgesehen. Die Federkraft 30 wirkt nur bei der Verrastung in der Fahrstellung bzw. bei einer manuellen Verstellung auf den Verspannungsring 9. Das Spiegelgehäuse 17 zusammen mit den beweglichen Teilen des Antriebs fährt soweit in die Parkstellung, bis seine Bewegung durch einen die Parkstellung vorgebenden Anschlag beendet wird.

Wenn nun der Spiegelkopf wieder elektrisch ausgeklappt werden soll, wird entsprechend der Motor 13 aktiviert, wobei die als Anschlag wirkende Schräge des abgestuften Bereichs der Ablaufkontur 23 des Verspannungsringes 9 ein vorzeitiges Durchfahren des Freigangs des Abtriebszahnrades 11 verhindert. Das Spiegelgehäuse 17 zusammen mit den beweglichen Teilen des Antriebs 3 bewegt sich nun entgegen der in Fig. 5b) mit 32 bezeichneten Richtung aus der Parkstellung in die Fahrposition. Erst wenn aufgrund der genannten Bewegung die Verrastung zwischen Spiegelgehäuse 17 und dem Spiegelfuß 1 wieder in Eingriff kommt, wird der Freigang durchfahren und das Abtriebszahnrad 11 fährt wieder auf den Verspannungsring 9 bzw. auf die Stufe des abgestuften Bereichs der Ablaufkontur 23 auf. Die Federkraft 30 wirkt wieder auf das Spiegelgehäuse 17 und spannt es damit gegen den Spiegelfuß 1. Da der Motor 13 so ausgelegt ist, dass der zu schwach ist, die Verrastung zu lösen, verbleibt der Antrieb in dieser Stellung, die die Fahrposition ist.

Wenn ein Nutzer manuell den Spiegelkopf aus der elektrischen Beiklappstellung in die Fahrstellung ausklappen will, wird das Abtriebszahnrad 11 durch die Getriebeselbsthemmung zusammen mit dem Spiegelgehäuse, d.h. inklusive Antriebsteile und Spiegelkopf, mitgenommen und wird aus der Ablaufkontur 23 des Ringansatzes 18 auf den Verspannungsring 9 bewegt. Durch dieses Hochbewegen wird die Druckfeder 5 stark vorgespannt, wodurch die Federkraft 30 nun größer ist als in den vorherigen Zuständen. Bei Erreichen der Fahrstellung durch die manuelle Bewegung verrastet das Spiegelgehäuse 17 wieder mit dem Spiegelfuß 1, wobei das Abtriebszahnrad 11 mit seinen Vorsprüngen 31 auf dem oberen Rand des Verspannungsringes 9 verbleibt. Die Vorsprünge 31 des Abtriebszahnrades 8 liegen daher nur am Verspannungsring 9 auf und nicht gleichzeitig auf dem Ringansatz 18 des Fußteils 8. Dies ist auch dann der Fall, wenn der Spiegelkopf die Fahrstellung erreicht und die Verrastungskontur 28 des Spiegelgehäuses 17 und die Rastelemente 29 des Spiegelfußes 1 in Eingriff kommen.

Beim nächsten elektrischen Betätigen wird das Abtriebszahnrad 11 weiter gedreht, so lange, bis es wieder die Ablaufkontur 23 am Verspannungsring 9 und damit die Ausgangsstellung erreicht.

In dem beschriebenen Beispiel gemäß 5a) und 5b) haben die Rastvorsprünge 24 am Verspannungsring 9 keine Funktion bzw. sie gleiten auf der ebenen Fläche 27 des Spiegelgehäuses 17.

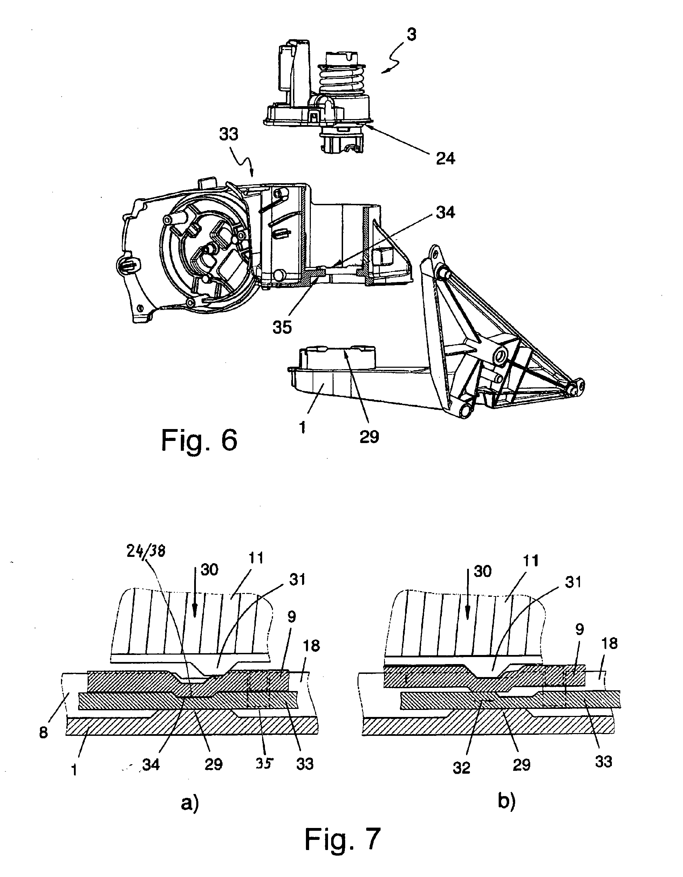

In Fig. 6 und Fig. 7 sind die Bestandteile des zweiten Spiegels in Ansichten, die den Figuren 4 und 5 entsprechen, dargestellt. Die Antriebsanordnung 3 und der Spiegelfuß 1 sind so aufgebaut, wie bei dem erstem Spiegel gemäß Fig. 4, lediglich das Spiegelgehäuse 33 unterscheidet sich von dem Spiegelgehäuse 17 darin, dass die dem Spiegelfuß 1 zugewandte Oberfläche 35 des das Durchgangsloch umgebenden Randes eben und glatt ist und die dem Verspannungsring 9 der Antriebsanordnung 3 zugewandte Oberfläche des Randbereichs Rastkonturen 34 aufweist.

In der Fig. 7a)/7b) sind wiederum Darstellungen der Abwicklungen von Teilen des Spiegels in der Fahrstellung und beim Abklappen bzw. Beiklappen in die Parkposition dargestellt. Im Unterschied zu Fig. 5a) ist bei dem zweiten Spiegel gem. Fig. 7a) das Spiegelgehäuse 33 nicht mit dem Spiegelfuß 1 verrastet, sondern die Verrastungskontur 29 des Spiegelfußes, die als ebene Fläche mit zwei Rampen ausgebildet, gleitet auf der Unterseite des Spiegelgehäuses 33 entlang bzw. liegt auf dieser ebenen glatten Fläche auf. In diesem Ausführungsbeispiel findet eine Verrastung an der Schnittstelle zwischen Verspannungsring 9 und Spiegelgehäuse 33 statt, d.h. das Rastelement 24 des Verspannungsringes 9 greift in die Rastvertiefung 34 auf der dem Spiegelfuß 1 entgegengesetzten Seite des Randbereichs ein. Die Fahrposition wird nun über den Verspannungsring 9 bestimmt, der mit dem Spiegelfuß 1 drehfest über den Ringansatz 18 des Fußteils 8 verbunden ist. Ansonsten ist die Funktionsweise gleich, d.h. die Vorsprünge des Zahnrades 11 liegen auf der erhöhten Stufe der Ablaufkontur 23 des Verspannungsringes auf, wobei ein Anschlag der Ablaufkontur 23 die Fahrposition definiert.

Wenn der Spiegelkopf in die Parkposition bewegt werden soll, wird zuerst der Motor 13 bestromt und die Vorsprünge 31 fahren aufgrund des Freiganges des Zahnrades 11 auf die Kontur 19 des Ringansatzes 18, wodurch die Federkraft 30 der Druckfeder 5 auf den Ringansatz des Fußteils 8 und damit auf den Spiegelfuß 1 geleitet wird. Das Spiegelgehäuse 33 kann sich bewegen, wodurch die Verrastung 24, 34 zwischen Spiegelgehäuse 33 und Verspannungsring 9 gelöst wird und der Verspannungsring 9 axial verschoben wird. Das Spiegelgehäuse 33 und damit der Spiegelkopf behält seine Anfangshöhe bei, so dass die Funktion des Anhebens nicht erfüllt wird.

Wie im Beispiel nach Fig. 5 fährt der Spiegelkopf bzw. das Spiegelgehäuse 33 in die Parkposition und wenn der Spiegel wieder ausgeklappt werden soll, ist der Vorgang entsprechend dem, der zuvor beschrieben wurde. Beim manuellen Ausklappen, nachdem der Spiegelkopf in die Parkposition über den elektrischen Antrieb gebracht wurde, wird wieder das Abtriebszahnrad 11 durch die Getriebeselbsthemmung zusammen mit dem Spiegelgehäuse 33 mitgenommen, wobei das Abtriebszahnrad 11 aus der Kontur 24 des Ringansatzes 18 auf den Verspannungsring 9 aufläuft. Beim Erreichen der Fahrstellung, d.h. wenn die Rastkonturen 24, 34 am Verspannungsring 9 und am Spiegelgehäuse 33 wieder übereinstimmen, verrasten beide Teile.

Die Bestandteile des ersten Spiegels gemäß Fig. 4 und Fig. 5 und des zweiten Spiegels gemäß Fig. 6 und Fig. 7 stimmen somit bis auf die Ausbildung des Spiegelgehäuses 17 und des Spiegelgehäuses 33 überein, so dass zwei Spiegel mit unterschiedlichen Funktionen bei Verwendung nur eines unterschiedlichen Spiegelgehäuses zur Verfügung gestellt werden können.

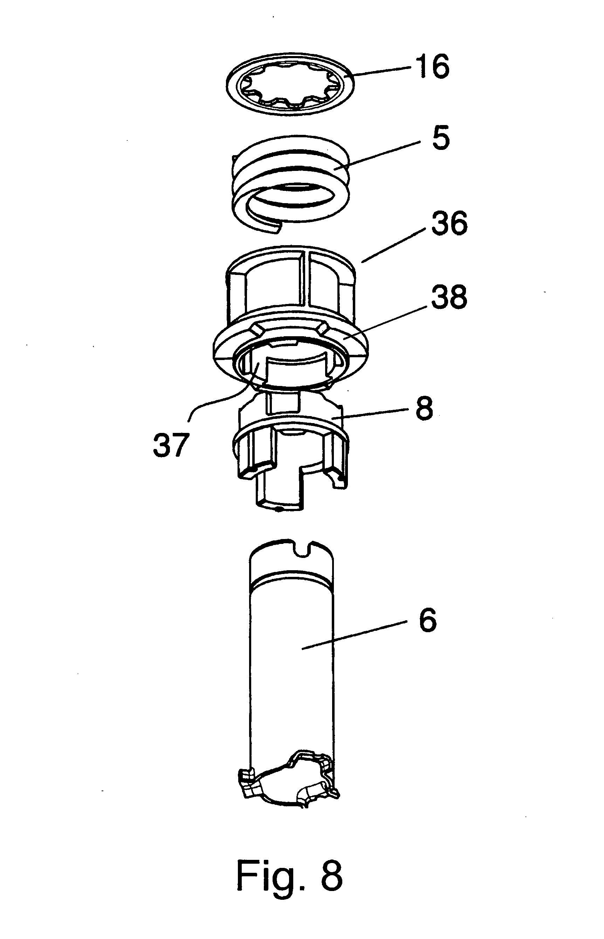

Fig. 8 zeigt die Einzelteile eines manuellen Einsatzes, der im Falle eines mechanischen Spiegels den oben beschriebenen elektrischen Antrieb ersetzt. Die Teile Klemmscheibe 16, Druckfeder 5, Fußteil 8 und Bajonetthülse 6 sind dieselben Teile wie sie im elektrischen Antrieb vorkommen. Zusätzlich ist eine Distanzhülse 36 vorgesehen, die ein Teil ist, der nur beim mechanischen Spiegel vorkommt. Die Distanzhülse 36 ist vorzugsweise aus Kunststoff gefertigt und ist axial im Fußteil 8 geführt und besitzt an ihrem Innenumfang die gleichen Führungselemente 37 und an ihrer Unterseite die gleichen Rastelemente 38 wie die des Verspannungsrings 9 an seinem Innenumfang und seiner Unterseite. Ein Vorteil der axialen Führung ist, dass die Druckfeder 5 während des Betriebs keinem Drehmoment ausgesetzt wird, was gegebenenfalls eine Geräuschentwicklung vermeidet.

Der beschriebene manuelle Einsatz, der bis auf die Distanzhülse 36 identische Teile wie beim ersten und zweiten Spiegel mit elektrischen Antrieb verwendet, kann sowohl mit einem Spiegelgehäuse 17 des ersten Spiegels als auch mit einem Spiegelgehäuse 33 des zweiten Spiegels verwendet werden. Im Falle des ersten Spiegels mit Lift & Turn sind die Rastelemente 38 der Distanzhülse 36 ohne Funktion und die Distanzhülse 36 dient nur dazu, die Bauhöhe des elektrischen Antriebs nachzuahmen, um weitgehend identische Teile verwenden zu können. Im Falle des zweiten Spiegels ohne Lift & Turn übernimmt die Distanzhülse 36 zusätzlich die Funktion des Verspannungsrings 9 und bestimmt im Zusammenspiel mit den Rastvertiefungen 34 im Spiegelgehäuse 33 auf der vom Spiegelfuß 1 abgewandten Seite die Position des Spiegelkopfs in Fahrposition.

## Patentansprüche

1. Gruppe von einen Spiegelkopf und einen Spiegelfuß aufweisenden Außenspiegeln mit unterschiedlichen Funktionen, mindestens umfassend:
- einen ersten Spiegel mit einem elektrischen Antrieb (3), der eine Funktion des Anhebens und des Drehens des Spiegelkopfes um eine Drehachse sowie eine erste und zweite Verrastung für die Fahrposition des Spiegelkopfes aufweist,
- einen zweiten Spiegel mit einem elektrischen Antrieb (3), der eine Funktion des Drehens des Spiegelkopfes um eine Drehachse und eine erste und zweite Verrastung für die Fahrposition des Spiegelkopfes aufweist,
wobei der Spiegelkopf der Spiegel ein Spiegelgehäuse (17, 33) umfasst, in das die jeweiligen Antriebe (3) von der dem Spiegelfuß (1) abgewandten Seite einsetzbar sind,
wobei der Spiegelfuß mindestens ein Rastelement (29) aufweist und die elektrischen Antriebe des ersten und des zweiten Spiegels in ihrem Aufbau identisch sind und jeweils umfassen:
- ein über einen Elektromotor (13) angetriebenes Zahnrad (11),
- ein mit dem Spiegelfuß (1) verbindbares Fußteil (8), das einen dem Zahnrad (11) zugewandten Ringansatz (18) mit einer Kontur (19) aufweist,
- einen drehfest mit dem Fußteil (8) verbundenen, axial verschiebbaren Verspannungsring (9), der Auflagekonturen (23) für mindestens einen an dem Zahnrad (11) angeordneten Vorsprung (31) und an der den Auflagekonturen (23) abgewandten Seite mindestens ein Rastelement (24) aufweist,
wobei der Verspannungsring (9) mit Auflagekonturen (23) und Vorsprung (31) des Zahnrades (11) die jeweilige erste Verrastung realisieren,
**dadurch gekennzeichnet, dass** das Spiegelgehäuse (17) des ersten Spiegels mindestens ein dem Spiegelfuß (1) zugewandtes Gegenrastelement (28) und eine dem Spiegelfuß (1) abgewandte glatte Fläche (27) aufweist,
und das Spiegelgehäuse (33) des zweiten Spiegels mindestens ein dem Spiegelfuß (1) abgewandtes Gegenrastelement (34) und eine dem Spiegelfuß (1) zugewandte glatte Fläche (35) aufweist, wobei
für den ersten Spiegel die zweite Verrastung durch das mindestens eine Rastelement (29) am Spiegelfuß (1) und das mindestens eine Gegenrastelement (28) am Spiegelgehäuse (17) und die Funktion des Anhebens durch das Lösen der zweiten Verrastung zwischen Spiegelfuß (1) und Spiegelgehäuse (17) in Zusammenhang mit dem Anheben des Verspannungsringes (9) durch Zusammenspiel der Auflagekonturen (23) des Verspannungsringes (9) und der Kontur (19) am Ringansatz (18) des Fußteils (8) realisiert sind,
und für den zweiten Spiegel die zweite Verrastung durch das mindestens eine Rastelement (24) am Verspannungsring (9) und dem mindestens einen Gegenrastelement (34) am Spiegelgehäuse (33) realisiert ist.

2. Gruppe nach Anspruch 1, **dadurch gekennzeichnet, dass** bei dem ersten Spiegel das mindestens eine Rastelement (24) des Verspannungsringes (9) auf der ebenen Fläche (27) des Spiegelgehäuses (17) gleitet und bei dem zweiten Spiegel die ebene Fläche (35) des Spiegelgehäuses (33) auf dem mindestens einen Gegenrastelement (29) des Spiegelfußes (1) gleitet.

3. Gruppe nach Anspruch 1 oder Anspruch 2, **gekennzeichnet durch** einen dritten Spiegel, der als mechanischer Spiegel mit einer federbelasteten Verrastung des Spiegelkopfes entsprechend der zweiten Verrastung des jeweiligen Antriebs ausgebildet ist und einen Einsatz mit einem Fußteil (8),identisch zu dem des elektrischen Antriebs und eine in dem Fußteil (8) geführte Distanzhülse (36) umfasst, die an der dem Spiegelfuß (1) zugewandten Seite mindestens ein Rastelement (38) entsprechend dem mindestens einem Rastelement (24) des Verspannungsringes (9) aufweist, wobei das Spiegelgehäuse (17, 33) des mechanischen Spiegels das des ersten oder des zweiten Spiegels ist.

4. Gruppe nach Anspruch 3, **dadurch gekennzeichnet, dass** bei Verwendung des Spieigelgehäuses (17) des ersten Spiegels das mindestens eine Rastelement (38) der Distanzhülse (36) des dritten Spiegels auf der ebenen Fläche (27) des Spiegelgehäuses (17) gleitet und bei Verwendung des Spiegelgehäuses (33) des zweiten Spiegels das mindestens eine Rastelement (38) der Distanzhülse (36) mit dem mindestens einen Gegenrastelement (34) des Spiegelgehäuses (33) verrastet.

5. Gruppe nach einem der Ansprüche 1 bis 4, **dadurch gekennzeichnet, dass** der jeweilige Spiegelkopf um eine Drehachse schwenkbar ist und eine die Drehachse umgreifende Druckfeder (5) das Spiegelgehäuse (17, 33) des Spiegelkopfes gegen den Spiegelfuß (1) drückt.

6. Gruppe nach einem der Ansprüche 1 bis 5, **dadurch gekennzeichnet, dass** bei dem elektrischen Antrieb des ersten und zweiten Spiegels an dem Ringansatz (18) des Fußteils (8) und an dem Verspannungsring (9) Führungselemente (20, 22) für die relative axiale, aber drehfeste Bewegung zueinander angeordnet sind.

7. Gruppe nach einem der Ansprüche 1 bis 6, **dadurch gekennzeichnet, dass** bei dem elektrischen Antrieb (3) der Verspannungsring (9) den Ringansatz (18) umgreift und bei dem mechanischen Spiegel die Distanzhülse (36) den Ringansatz (18) umgreift.

8. Gruppe nach einem der Ansprüche 1 bis 7, **dadurch gekennzeichnet, dass** bei dem elektrischen Antrieb des ersten und zweiten Spiegels die erste Verrastung zum Arretieren des Spiegelkopfes in der Fahrposition durch eine Schrägfläche der Auflagekontur (23) des Verspannungsringes (9) gegeben ist, gegen die sich der Vorsprung (31)des Zahnrades (11) abstützt.

9. Gruppe nach einem der Ansprüche 1 bis 8, **dadurch gekennzeichnet, dass** bei dem elektrischen Antrieb (3) die Kontur (19) des Ringansatzes (18) und die Auflagekontur (23) des Verspannungsringes (9) in ihren Niveaus so aneinander angepasst sind, dass in der Fahrposition des Spiegelkopfes der mindestens eine Vorsprung (31) des Zahnrades (11) auf der Auflagekontur (23) des Verspannungsringes (8) aufliegt zum Übertragen der Kraft einer vorspannenden Druckfeder (5) über das Spiegelgehäuse (17, 33) auf den Spiegelfuß (1), wobei bei Erregen des Motors (13) zum Bewegen des Spiegelkopfes in seine Parkposition das Zahnrad (11) mit dem mindestens einen Vorsprung (31) abhängig von einem Freigang des Zahnrades (11) bezüglich des Verspannungsringes (9) auf die Kontur (19) des Ringansatzes (18) des Fußteils (8) läuft und der Verspannungsring (9) zum Lösen der zweiten Verrastung axial anhebbar ist.

10. Gruppe nach einem der Ansprüche 1 bis 9, **dadurch gekennzeichnet, dass** bei dem elektrischen Antrieb (3) zur Aufnahme der Federkraft einer Druckfeder (5) beim Einklappen in die und/oder Ausklappen aus der Parkposition die Kontur (19) des Ringansatzes (18) des Fußteils (8) im Bereich des Freiganges des Zahnrades (11) auf einem in Bezug auf die Auflagekonturen (23) des Verspannungsringes (9) höherem Niveau liegt.

11. Gruppe nach einem der Ansprüche 1 bis 10, **dadurch gekennzeichnet, dass** bei dem elektrischen Antrieb (3) die Auflagekonturen (23) des Verspannungsringes (9) in der Fahrposition auf einem höheren Niveau liegen als die Kontur (19) des Ringansatzes (18) des Fußteils (8).

12. Gruppe nach einem der Ansprüche 1 bis 11, **dadurch gekennzeichnet, dass** die Drehachse des Spiegelkopfes des ersten, zweiten oder mechanischen Spiegels von einer Bajonetthülse (6) gebildet wird, die mit dem Spiegelfuß (1) zu einer Bajonettverbindung verbindbar ist und die von der Druckfeder (5) umgriffen wird.

13. Gruppe nach einem der Ansprüche 1 bis 12, **dadurch gekennzeichnet, dass** der Einsatz des mechanischen Spiegels, der eine Bajonetthülse (6) und das diese umgreifende Fußteil (8), Distanzhülse (36), Druckfeder (5) und eine die Druckfeder an der Bajonetthülse festlegende Klemmscheibe (16) umfasst, von der von dem Spiegelfuß abgewandten Seite in das jeweilige Spiegelgehäuse (17, 33) einsetzbar ist.

14. Gruppe nach einem der Ansprüche 1 bis 13, **dadurch gekennzeichnet, dass** die Rastelemente (24, 29, 38) und Gegenrastelemente (28, 34) der zweiten Verrastung des ersten, zweiten und mechanischen Spiegels drei über den Umfang verteilte Erhebungen und Vertiefungen sind.

15. Gruppe nach einem der Ansprüche 1 bis 14, **dadurch gekennzeichnet, dass** die Druckfeder (5) innerhalb oder außerhalb eines dem elektrischen Antrieb zugeordneten Gehäuse untergebracht ist.

## Claims

1. Group of external mirrors which have a mirror head and a mirror foot with different functions, at least comprising:
- a first mirror with an electric drive (3) which has a function of raising and rotating the mirror head about a rotational axis and has a first and second latching means for the driving position of the mirror head,
- a second mirror with an electric drive (3) which has a function of rotating the mirror head about a rotational axis and has a first and second latching means for the driving position of the mirror head,
the mirror head of the mirrors comprising a mirror housing (17, 33), into which the respective drives (3) can be inserted from the side which faces away from the mirror foot (1),
the mirror foot having at least one latching element (29), and the electric drives of the first and the second mirror being of identical construction and in each case comprising:
- a gearwheel (11) which is driven via an electric motor (13),
- a foot part (8) which can be connected to the mirror foot (1) and has an annular shoulder (18) which faces the gearwheel (11) with a contour (19),
- an axially displaceable bracing ring (9) which is connected fixedly to the foot part (8) so as to rotate with it, has bearing contours (23) for at least one projection (31) which is arranged on the gearwheel (11), and has at least one latching element (24) on the side which faces away from the bearing contours (23), the bracing ring (9) with bearing contours (23) and projection (31) of the gearwheel (11) realizing the respective first latching means,
**characterized in that** the mirror housing (17) of the first mirror has at least one counter-latching element (28) which faces the mirror foot (1) and a smooth surface (27) which faces away from the mirror foot (1),
and the mirror housing (33) of the second mirror has at least one counter-latching element (34) which faces away from the mirror foot (1) and a smooth surface (35) which faces the mirror foot (1),
the second latching means for the first mirror being realized by the at least one latching element (29) on the mirror foot (1) and the at least one counter-latching element (28) on the mirror housing (17) and the function of raising being realized by the releasing of the second latching means between the mirror foot (1) and the mirror housing (17) in conjunction with the raising of the bracing ring (9) by interaction of the bearing contours (23) of the bracing ring (9) and the contour (19) on the annular shoulder (18) of the foot part (8),
and the second latching means for the second mirror being realized by the at least one latching element (24) on the bracing ring (9) and the at least one counter-latching element (34) on the mirror housing (33).

2. Group according to Claim 1, **characterized in that**, in the case of the first mirror, the at least one latching element (24) of the bracing ring (9) slides on the planar surface (27) of the mirror housing (17) and, in the case of the second mirror, the planar surface (35) of the mirror housing (33) slides on the at least one counter-latching element (29) of the mirror foot (1).

3. Group according to Claim 1 or Claim 2, **characterized by** a third mirror which is configured as a mechanical mirror with a spring-loaded latching means of the mirror head in accordance with the second latching means of the respective drive and comprises an insert with a foot part (8), identical to that of the electric drive, and a spacer sleeve (36) which is guided in the foot part (8) and, on the side which faces the mirror foot (1), has at least one latching element (38) in accordance with the at least one latching element (24) of the bracing ring (9), the mirror housing (17, 33) of the mechanical mirror being that of the first or the second mirror.

4. Group according to Claim 3, **characterized in that**, if the mirror housing (17) of the first mirror is used, the at least one latching element (38) of the spacer sleeve (36) of the third mirror slides on the planar surface (27) of the mirror housing (17) and, if the mirror housing (33) of the second mirror is used, the at least one latching element (38) of the spacer sleeve (36) latches with the at least one counter-latching element (34) of the mirror housing (33).

5. Group according to one of Claims 1 to 4, **characterized in that** the respective mirror head can be pivoted about a rotational axis, and a compression spring (5) which reaches around the rotational axis presses the mirror housing (17, 33) of the mirror head against the mirror foot (1).

6. Group according to one of Claims 1 to 5, **characterized in that**, in the case of the electric drive of the first and second mirror, guide elements (20, 22) for the relative axial but rotationally fixed movement with respect to one another are arranged on the annular shoulder (18) of the foot part (8) and on the bracing ring (9).

7. Group according to one of Claims 1 to 6, **characterized in that**, in the case of the electric drive (3), the bracing ring (9) reaches around the annular shoulder (18) and, in the case of the mechanical mirror, the spacer sleeve (36) reaches around the annular shoulder (18).

8. Group according to one of Claims 1 to 7, **characterized in that**, in the case of the electric drive of the first and second mirror, the first latching means for locking the mirror head in the driving position is produced by way of an oblique surface of the bearing contour (23) of the bracing ring (9), against which oblique surface the projection (31) of the gearwheel (11) is supported.

9. Group according to one of Claims 1 to 8, **characterized in that**, in the case of the electric drive (3), the contour (19) of the annular shoulder (18) and the bearing contour (23) of the bracing ring (9) are adapted to one another in terms of their levels in such a way that, in the driving position of the mirror head, the at least one projection (31) of the gearwheel (11) lies on the bearing contour (23) of the bracing ring (8) in order to transmit the force of a prestressing compression spring (5) via the mirror housing (17, 33) to the mirror foot (1), the gearwheel (11) running with the at least one projection (31), upon excitation of the motor (13) in order to move the mirror head into its parked position, onto the contour (19) of the annular shoulder (18) of the foot part (8) depending on a free travel of the gearwheel (11) with regard to the bracing ring (9), and it being possible for the bracing ring (9) to be raised up axially in order to release the second latching means.

10. Group according to one of Claims 1 to 9, **characterized in that**, in the case of the electric drive (3), the contour (19) of the annular shoulder (18) of the foot part (8) in the region of the free travel of the gearwheel (11) lies at a higher level in relation to the bearing contours (23) of the bracing ring (9) in order to absorb the spring force of a compression spring (5) during folding into and/or folding out of the parked position.

11. Group according to one of Claims 1 to 10, **characterized in that**, in the case of the electric drive (3), the bearing contours (23) of the bracing ring (9) in the driving position lie at a higher level than the contour (19) of the annular shoulder (18) of the foot part (8).

12. Group according to one of Claims 1 to 11, **characterized in that** the rotational axis of the mirror head of the first, second or mechanical mirror is formed by a bayonet sleeve (6) which can be connected to the mirror foot (1) to form a bayonet connection and which is reached around by the compression spring (5).

13. Group according to one of Claims 1 to 12, **characterized in that** the insert of the mechanical mirror, which comprises a bayonet sleeve (6) and the foot part (8) which reaches around it, a spacer sleeve (36), a compression spring (5) and a clamping washer (16) which fixes the compression spring on the bayonet sleeve, can be inserted into the respective mirror housing (17, 33) from the side which faces away from the mirror foot.

14. Group according to one of Claims 1 to 13, **characterized in that** the latching elements (24, 29, 38) and counter-latching elements (28, 34) of the second latching means of the first, second and mechanical mirror are three elevations and depressions which are distributed over the circumference.

15. Group according to one of Claims 1 to 14, **characterized in that** the compression spring (5) is accommodated inside or outside a housing which is assigned to the electric drive.

## Revendications

1. Groupe de rétroviseurs extérieurs comprenant des fonctions différentes, présentant une tête de rétroviseur et une base de rétroviseur, comprenant au moins :
- un premier rétroviseur avec un entraînement électrique (3), qui présente une fonction de soulèvement et de rotation de la tête de rétroviseur autour d'un axe de rotation ainsi qu'un premier et un deuxième encliquetage pour la position de conduite de la tête de rétroviseur,
- un deuxième rétroviseur comprenant un entraînement électrique (3), qui présente une fonction de rotation de la tête de rétroviseur autour d'un axe de rotation et un premier et un deuxième encliquetage pour la position de conduite de la tête de rétroviseur,
la tête de rétroviseur des rétroviseurs comprenant un boîtier de rétroviseur (17, 33) dans lequel les entraînements respectifs (3) peuvent être insérés depuis le côté opposé à la base de rétroviseur (1),
la base de rétroviseur présentant au moins un élément d'encliquetage (29) et les entraînements électriques du premier et du deuxième rétroviseur étant de construction identique et comprenant à chaque fois :
- une roue dentée (11) entraînée par le biais d'un moteur électrique (13),
- une partie de base (8) pouvant être connectée à la base de rétroviseur (1), laquelle présente une pièce rapportée annulaire (18) tournée vers la roue dentée (11) avec un contour profilé (19),
- une bague de serrage (9) pouvant être déplacée axialement, connectée de manière solidaire en rotation à la partie de base (8), qui présente des contours profilés d'appui (23) pour au moins une saillie (31) disposée au niveau de la roue dentée (11) et au moins un élément d'encliquetage (24) au niveau du côté opposé aux contours profilés d'appui (23), la bague de serrage (9) réalisant le premier encliquetage respectif au moyen des contours profilés d'appui (23) et de la saillie (31) de la roue dentée (11),
**caractérisé en ce que** le boîtier de rétroviseur (17) du premier rétroviseur présente au moins un élément d'encliquetage conjugué (28) tourné vers la base de rétroviseur (1) et une surface lisse (27) opposée à la base de rétroviseur (1),
et **en ce que** le boîtier de rétroviseur (33) du deuxième rétroviseur présente au moins un élément d'encliquetage conjugué (34) opposé à la base de rétroviseur (1) et une surface lisse (35) tournée vers la base de rétroviseur (1),
le deuxième encliquetage pour le premier rétroviseur étant réalisé par l'au moins un élément d'encliquetage (29) au niveau de la base de rétroviseur (1) et l'au moins un élément d'encliquetage conjugué (28) étant réalisé au niveau du boîtier de rétroviseur (17) et la fonction de soulèvement étant réalisée par desserrage du deuxième encliquetage entre la base de rétroviseur (1) et le boîtier de rétroviseur (17) en association avec le soulèvement de la bague de serrage (9) par coopération des contours profilés d'appui (23) de la bague de serrage (9) et du contour profilé (19) au niveau de la pièce rapportée annulaire (18) de la partie de base (8),
et le deuxième encliquetage pour le deuxième rétroviseur étant réalisé par l'au moins un élément d'encliquetage (24) au niveau de la bague de serrage (9) et par l'au moins un élément d'encliquetage conjugué (34) au niveau du boîtier de rétroviseur (33).

2. Groupe selon la revendication 1, **caractérisé en ce que** dans le cas du premier rétroviseur, l'au moins un élément d'encliquetage (24) de la bague de serrage (9) glisse sur la surface plane (27) du boîtier de rétroviseur (17) et dans le cas du deuxième rétroviseur, la surface plane (35) du boîtier de rétroviseur (33) glisse sur l'au moins un élément d'encliquetage conjugué (29) de la base de rétroviseur (1).

3. Groupe selon la revendication 1 ou la revendication 2, **caractérisé par** un troisième rétroviseur qui est réalisé sous forme de rétroviseur mécanique avec un encliquetage sollicité par ressort de la tête de rétroviseur correspondant au deuxième encliquetage de l'entraînement respectif et qui comprend un insert avec une partie de base (8), de manière identique à celle de l'entraînement électrique et une douille d'espacement (36) guidée dans la partie de base (8), laquelle présente au niveau du côté tourné vers la base de rétroviseur (1) au moins un élément d'encliquetage (38) correspondant à l'au moins un élément d'encliquetage (24) de la bague de serrage (9), le boîtier de rétroviseur (17, 33) du rétroviseur mécanique étant celui du premier ou du deuxième rétroviseur.

4. Groupe selon la revendication 3, **caractérisé en ce que** lors de l'utilisation du boîtier de rétroviseur (17) du premier rétroviseur, l'au moins un élément d'encliquetage (38) de la douille d'espacement (36) du troisième rétroviseur glisse sur la surface plane (27) du boîtier de rétroviseur (17) et lors de l'utilisation du boîtier de rétroviseur (33) du deuxième rétroviseur, l'au moins un élément d'encliquetage (38) de la douille d'espacement (36) s'encliquète avec l'au moins un élément d'encliquetage conjugué (34) du boîtier de rétroviseur (33).

5. Groupe selon l'une quelconque des revendications 1 à 4, **caractérisé en ce que** la tête de rétroviseur respective peut pivoter autour d'un axe de rotation et un ressort de compression (5) venant en prise autour de l'axe de rotation presse le boîtier de rétroviseur (17, 33) de la tête de rétroviseur contre la base de rétroviseur (1).

6. Groupe selon l'une quelconque des revendications 1 à 5, **caractérisé en ce que** dans le cas de l'entraînement électrique du premier et du deuxième rétroviseur, au niveau de la pièce rapportée annulaire (18) de la partie de base (8) et au niveau de la bague de serrage (9), sont disposés des éléments de guidage (20, 22) pour le déplacement relatif axial mais solidaire en rotation les uns par rapport aux autres.

7. Groupe selon l'une quelconque des revendications 1 à 6, **caractérisé en ce que** dans le cas de l'entraînement électrique (3), la bague de serrage (9) vient en prise autour de la pièce rapportée annulaire (18) et dans le cas du rétroviseur mécanique, la douille d'espacement (36) vient en prise autour de la pièce rapportée annulaire (18).

8. Groupe selon l'une quelconque des revendications 1 à 7, **caractérisé en ce que** dans le cas de l'entraînement électrique du premier et du deuxième rétroviseur, le premier encliquetage est prévu pour bloquer la tête de rétroviseur dans la position de conduite par une surface oblique du contour profilé d'appui (23) de la bague de serrage (9), contre laquelle s'appuie la saillie (31) de la roue dentée (11).

9. Groupe selon l'une quelconque des revendications 1 à 8, **caractérisé en ce que** dans le cas de l'entraînement électrique (3), le contour profilé (19) de la pièce rapportée annulaire (18) et le contour profilé d'appui (23) de la bague de serrage (9) ont un niveau adapté l'un à l'autre de telle sorte que dans la position de conduite de la tête de rétroviseur, l'au moins une saillie (31) de la roue dentée (11) s'applique sur le contour profilé d'appui (23) de la bague de serrage (8) pour transférer la force d'un ressort de compression à précontrainte (5) par le biais du boîtier de rétroviseur (17, 33) à la base de rétroviseur (1), et lors de l'excitation du moteur (13) pour déplacer la tête de rétroviseur dans sa position de stationnement, la roue dentée (11) tournant avec l'au moins une saillie (31) en fonction d'une course libre de la roue dentée (11) par rapport à la bague de serrage (9) sur le contour profilé (19) de la pièce rapportée annulaire (18) de la partie de base (8) et la bague de serrage (9) pouvant être soulevée axialement pour libérer le deuxième encliquetage.

10. Groupe selon l'une quelconque des revendications 1 à 9, **caractérisé en ce que** dans le cas de l'entraînement électrique (3), pour recevoir la force de ressort d'un ressort de compression (5) lors du rabattement dans et/ou de la sortie hors de la position de stationnement, le contour profilé (19) de la pièce rapportée annulaire (18) de la partie de base (8) se situe dans la région de la course libre de la roue dentée (11) à un niveau supérieur par rapport aux contours profilés d'appui (23) de la bague de serrage (9).

11. Groupe selon l'une quelconque des revendications 1 à 10, **caractérisé en ce que** dans le cas de l'entraînement électrique (3), les contours profilés d'appui (23) de la bague de serrage (9) se situent dans la position de conduite à un niveau plus élevé que le contour profilé (19) de la pièce rapportée annulaire (18) de la partie de base (8).

12. Groupe selon l'une quelconque des revendications 1 à 11, **caractérisé en ce que** l'axe de rotation de la tête de rétroviseur du premier ou du deuxième rétroviseur ou du rétroviseur mécanique est formé par une douille à baïonnette (6) qui peut être connectée à la base de rétroviseur (1) pour former une connexion à baïonnette et qui est saisie sur son pourtour par le ressort de compression (5).

13. Groupe selon l'une quelconque des revendications 1 à 12, **caractérisé en ce que** l'insert du rétroviseur mécanique, qui comprend une douille à baïonnette (6) et la partie de base (8) venant en prise autour de celle-ci, la douille d'espacement (36), le ressort de compression (5) et une rondelle de serrage (16) fixant le ressort de compression à la douille à baïonnette, peut être inséré depuis le côté opposé à la base de rétroviseur dans le boîtier de rétroviseur respectif (17, 33).

14. Groupe selon l'une quelconque des revendications 1 à 13, **caractérisé en ce que** les éléments d'encliquetage (24, 29, 38) et les éléments d'encliquetage conjugués (28, 34) du deuxième encliquetage du premier et du deuxième rétroviseur ainsi que du rétroviseur mécanique sont trois rehaussements et renfoncements répartis sur la périphérie.

15. Groupe selon l'une quelconque des revendications 1 à 14, **caractérisé en ce que** le ressort de compression (5) est monté à l'intérieur ou à l'extérieur d'un boîtier associé à l'entraînement électrique.
